# FASCICULE DE BREVET EUROPEEN

(11) **EP 3 144 213 B1**
(45) Date de publication et mention de la délivrance du brevet: **11.09.2019**
(21) Numéro de dépôt: 16306184.9
(22) Date de dépôt: 16.09.2016
(51) Int. Cl.: B63B 35/00, B63B 27/10, B66D 3/00, F03D 1/00

(54) **PROCÉDÉ POUR LA POSE D'UN ÉLÉMENT ALLONGÉ CONSTITUTIF D'UNE ÉOLIENNE, EN PARTICULIER UN MÂT D'ÉOLIENNE**
VERFAHREN FÜR DEN EINBAU EINES LÄNGLICHEN GRUNDELEMENTS EINER WINDKRAFTANLAGE, INSBESONDERE FÜR DEN MAST DER WINDKRAFTANLAGE
METHOD FOR INSTALLING AN ELONGATE ELEMENT FORMING A WIND TURBINE, IN PARTICULAR A WIND-TURBINE TOWER

(30) Priorité: 17.09.2015 FR 1558741
(43) Date de publication de la demande: 22.03.2017
(73) Titulaire: REEL, 69450 Saint-Cyr-au-Mont-d'Or (FR)
(72) Inventeur: KONATE, Karamoko, 17220 SAINT-ROGATIEN (FR)
(74) Mandataire: Jacobacci Coralis Harle

(56) Documents cités:
- EP-A1- 2 641 825
- WO-A1-2011/031148
- WO-A1-2014/193170
- WO-A2-2009/088287
- CN-Y- 201 236 117
- FR-A1- 3 012 560
- GB-A- 2 492 402

## Description

### DOMAINE TECHNIQUE AUQUEL SE RAPPORTE L'INVENTION

La présente invention concerne de manière générale le domaine des procédés et installations pour la pose d'un élément allongé constitutif d'une éolienne, en particulier un mât d'éolienne.

### ARRIERE-PLAN TECHNOLOGIQUE

Les éoliennes sont des dispositifs qui transforment l'énergie cinétique du vent en énergie électrique.

Elles sont constituées d'un mât (ou tour) portant une nacelle dans laquelle est destiné à tourner un rotor portant des pâles. Au sein de la nacelle, un générateur transforme l'énergie cinétique du vent en énergie électrique.

A ce jour, en vue de leur pose, les grandes éoliennes (dont la puissance est typiquement supérieure à 6 MW) sont souvent transportées en plusieurs parties détachées, au moyen d'un engin de transport.

Une fois sur le site de pose, des opérations de levage sont nécessaires pour l'assemblage des différentes parties.

Ces opérations s'effectuent classiquement au moyen de grues, de manière à installer successivement le mât, puis la nacelle et son rotor et enfin les pales.

Ces opérations terminées, l'engin de pose se déplace jusqu'au site de pose suivant pour renouveler cette séquence opérationnelle.

Mais, en pratique, un tel assemblage des parties d'éolienne sur le site de pose est particulièrement long, complexe et onéreux, notamment du fait de la dimension des pièces et de la hauteur de travail, et ce d'autant plus dans le cas d'éoliennes en mer.

En effet, à titre indicatif, les éoliennes de 8 MW ont un mat qui peut atteindre 140 mètres de haut, avec un rotor de 164 mètres de diamètre. Il est même envisagé des projets de grandes éoliennes dont la puissance serait comprise entre 10 et 15 MW, avec en corollaire des dimensions encore accrues.

Pour éviter cet assemblage sur site de pose, il est envisagé des technologies de transport et d'implantation pour des éoliennes préassemblées, utilisant des systèmes de grutage et de levage.

Mais cette approche nécessite alors des systèmes dont les proportions sont démesurées pour tenir compte des poids à soulever et des hauteurs à atteindre.

Il existe par conséquent un besoin de nouveaux procédés et engins de pose, particulièrement adaptés aux grandes éoliennes (avantageusement dont la puissance est supérieure à 6MW).

Un système d'installation d'éolienne est décrit dans WO 2014/193170.

### OBJET DE L'INVENTION

Afin de remédier aux inconvénients précités de l'état de la technique, la présente invention revendiquée propose un procédé et un engin pour optimiser la pose d'éoliennes, en particulier de grandes éoliennes en mer.

Plus particulièrement, on propose selon l'invention un procédé pour la pose d'au moins un élément allongé constitutif d'une éolienne, comportant une surface périphérique cylindrique (ou sensiblement cylindrique), en particulier un mât d'éolienne.

Le procédé de pose comprend au moins une opération de manoeuvre en translation verticale dudit au moins un élément allongé, qui est effectuée au moyen d'un dispositif de manoeuvre adapté au serrage et à l'avancement contrôlés dudit élément allongé,
lequel dispositif de manoeuvre comprend au moins un châssis annulaire qui définit un passage pour la circulation dudit élément allongé, suivant un axe de passage s'étendant verticalement, ou au moins approximativement verticalement,
lequel au moins un châssis annulaire porte plusieurs caissons de guidage agencés autour dudit axe de passage,
lesquels caissons de guidage comprennent chacun un corps support allongé sur lequel est guidée en translation une chaîne de guidage qui est entraînée par au moins une roue motorisée,
laquelle chaîne de guidage, s'étendant dans un plan passant par ledit axe de passage, comporte un brin frontal s'étendant verticalement ou au moins approximativement verticalement et en regard dudit axe de passage, pour prendre appui sur ladite surface périphérique cylindrique dudit élément allongé,
laquelle au moins une opération de manoeuvre en translation verticale est obtenue par un cheminement synchrone, et dans un même sens, desdits brins frontaux.

Un tel dispositif de manoeuvre assure une prise en charge par serrage d'un tronçon de l'élément allongé constitutif de l'éolienne à poser, et l'avancement piloté de ce dernier, pour permettre sa dépose d'une manière contrôlée sur un organe de réception (généralement une fondation).

Plus précisément, un premier rôle du dispositif de manoeuvre est de constamment serrer l'élément allongé d'une manière efficace.

Le second rôle de ce dispositif de manoeuvre est de manoeuvrer l'élément allongé pour assurer son déplacement en translation, d'une manière contrôlée.

Un autre avantage d'un tel dispositif de manoeuvre est sa capacité de levage, tout en restant relativement compact, apte à manoeuvrer verticalement un mât d'éolienne, voire même une grande éolienne entièrement préassemblée.

D'autres caractéristiques non limitatives et avantageuses du procédé de pose conforme à l'invention, prises individuellement ou selon toutes les combinaisons techniquement possibles, sont les suivantes :
- ledit au moins un châssis annulaire comprend au moins deux parties mobiles de châssis qui portent chacune l'un au moins desdits caissons de guidage ; lesquelles au moins deux parties mobiles de châssis sont manoeuvrables entre une configuration fermée de pose et une configuration ouverte d'accès audit passage de circulation ;
- en configuration fermée, lesdites au moins deux parties mobiles de châssis sont pilotables entre un état verrouillé mécaniquement et un état déverrouillé.

Selon un mode de réalisation particulier, le procédé comprend :
- une opération de convoyage dudit élément allongé au sein dudit au moins un châssis annulaire en configuration ouverte, au cours de laquelle ledit élément allongé est déplacé en translation horizontale, avec, d'une part, son axe longitudinal orienté verticalement, ou au moins approximativement verticalement, et, d'autre part, son extrémité inférieure reposant sur un organe de convoyage,
- une opération de pilotage dudit au moins un châssis annulaire en configuration fermée, de sorte que ledit élément allongé soit enserré par ledit dispositif de manoeuvre, et le cas échéant, une opération de pilotage desdites au moins deux parties mobiles de châssis en état verrouillé,
- une opération de manoeuvre verticale ascendante dudit élément allongé, par le biais dudit dispositif de manoeuvre, de manière à séparer ledit élément allongé par rapport audit organe de convoyage,
- une opération de positionnement de l'axe de passage coaxialement, ou au moins approximativement coaxialement, à un axe de pose défini par un organe de réception,
- une opération de manoeuvre verticale descendante dudit élément allongé, par le biais dudit dispositif de manoeuvre, de manière à poser l'extrémité inférieure dudit élément allongé sur ledit organe de réception,
- une opération de fixation de ladite extrémité inférieure dudit élément allongé sur ledit organe de réception,
- le cas échéant, une opération de pilotage desdites au moins deux parties mobiles de châssis en état déverrouillé, et
- une opération de pilotage dudit au moins un châssis annulaire en configuration ouverte, de sorte que ledit élément allongé est libéré par rapport audit dispositif de manoeuvre.

Dans ce cas, avantageusement, au cours de l'opération de manoeuvre verticale descendante dudit élément allongé, ledit dispositif de manoeuvre autorise une manoeuvre verticale ascendante dudit élément allongé, cela en cas d'une poussée exercée par ledit organe de réception sur l'extrémité inférieure dudit élément allongé.

Dans un mode de réalisation particulier, l'élément allongé consiste en un mât d'éolienne off-shore ; le dispositif de manoeuvre équipe un engin flottant ; et la pose consiste en une pose de l'extrémité inférieure dudit élément allongé sur un organe de réception consistant en une fondation reposant sur le fond marin.

L'invention propose également un engin pour la pose d'au moins un élément allongé constitutif d'une éolienne, en particulier un mât d'éolienne, comportant une surface périphérique cylindrique (ou sensiblement cylindrique).

L'engin comporte un dispositif pour la manoeuvre verticale dudit élément allongé.

Le dispositif de manoeuvre verticale, pour le serrage et l'avancement contrôlés dudit élément allongé, comprend au moins un châssis annulaire qui définit un passage pour la circulation dudit élément allongé, suivant un axe de passage s'étendant verticalement, ou au moins approximativement verticalement.

Ledit au moins un châssis annulaire porte plusieurs caissons de guidage agencés autour dudit axe de passage.

Les caissons de guidage comprennent chacun un corps support allongé sur lequel est guidée en translation une chaîne de guidage qui est entraînée par au moins une roue motorisée.

La chaîne périphérique de guidage, s'étendant dans un plan passant par ledit axe de passage, comporte un brin frontal s'étendant verticalement ou au moins approximativement verticalement et en regard dudit axe de passage, pour prendre appui sur ledit élément allongé.

Le dispositif de manoeuvre comprend des moyens pour piloter un cheminement synchrone, et dans un même sens, desdits brins frontaux.

D'autres caractéristiques non limitatives et avantageuses de l'engin de pose conforme à l'invention, prises individuellement ou selon toutes les combinaisons techniquement possibles, sont les suivantes :
- ledit au moins un châssis annulaire comprend au moins deux parties mobiles de châssis qui comprennent chacune l'un au moins desdits caissons de guidage ; lesquelles au moins deux parties mobiles de châssis sont associées à des moyens de manoeuvre entre une configuration fermée de pose et une configuration ouverte d'accès audit passage de circulation ; de préférence, lesdites au moins deux parties mobiles de châssis comportent des moyens de verrouillage mécanique en configuration fermée de pose, lesquels moyens de verrouillage sont pilotables entre un état verrouillé mécaniquement et un état déverrouillé ;

- ledit au moins un châssis annulaire se compose de plusieurs parties mobiles de châssis, par exemple de 2 à 4 ; de manière alternative, le châssis annulaire comprend une partie fixe de châssis portant au moins une partie mobile de châssis ;
- ledit au moins un châssis annulaire est porté par des moyens de manoeuvre en forme de grue ;
- les caissons de guidage sont solidarisés avec ledit au moins un châssis annulaire par le biais de moyens autorisant une variation angulaire de l'axe longitudinal du brin frontal par rapport à l'axe de passage ;
- il comporte au moins un organe de convoyage qui est apte à recevoir l'extrémité inférieure d'un élément allongé et qui est apte à porter ledit élément allongé verticalement ou au moins approximativement verticalement, lequel au moins un organe de convoyage est mobile dans différentes positions au sein dudit engin : - une position de stockage, située hors dudit dispositif de manoeuvre et dans laquelle ledit organe de convoyage est destiné à porter un élément allongé, - une position de présentation, dans laquelle ledit organe de convoyage est agencé pour présenter ledit élément allongé associé au sein dudit dispositif de manoeuvre, et - une position de garage, dans laquelle ledit organe de convoyage est agencé pour autoriser la circulation d'un autre organe de convoyage jusqu'au dispositif de manoeuvre ;
- la chaîne de guidage des caissons de guidage comporte des patins en matériau élastomère, par exemple en caoutchouc ;
- le dispositif de manoeuvre comporte au moins deux châssis annulaires superposés et coaxiaux ; chaque châssis annulaire comporte au moins quatre caissons de guidage ;
- ledit engin consiste en un navire comportant des moyens de flottaison, et un pont équipé dudit dispositif de manoeuvre ; dans ce cas, avantageusement, ledit pont comporte un passage traversant, s'étendant verticalement et en regard du passage de circulation dudit dispositif de manoeuvre ;
- l'engin de pose peut être équipé d'un système de compensation de houle.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue de côté d'un engin de pose selon l'invention, en forme d'un navire, qui porte un groupe de grandes éoliennes et dont la poupe est équipée du dispositif de manoeuvre verticale pour l'élément allongé d'une éolienne ;
- la figure 2 est une vue partielle et agrandie de la figure 1, montrant en détails le dispositif de manoeuvre verticale dans lequel est enserré un mât d'éolienne ;
- la figure 3 est une vue de côté, et agrandie, de l'un des caissons de guidage équipant le dispositif de manoeuvre ;
- la figure 4 est une vue de dessus de l'engin de pose selon la figure 1 ;
- la figure 5 est une vue partielle et agrandie de la figure 4, montrant en détails le dispositif de manoeuvre verticale ;
- la figure 6 représente, vue de côté et de manière isolée, le dispositif de manoeuvre verticale dont le châssis est manoeuvré en configuration ouverte ;
- la figure 7 représente, vue de dessus et de manière isolée, le châssis constitutif du dispositif de manoeuvre verticale qui est manoeuvré en configuration ouverte ;
- la figure 8 représente, vu de côté et de manière isolée, le dispositif de manoeuvre verticale dont le châssis est manoeuvré en configuration fermée autour d'un mât d'une éolienne ;
- la figure 9 représente, vue de dessus et de manière isolée, le châssis constitutif du dispositif de manoeuvre verticale qui est manoeuvré en configuration fermée autour du mât d'éolienne ;
- la figure 10 représente, vue de côté et de manière isolée, le dispositif de manoeuvre verticale dont le châssis est manoeuvré en configuration fermée, avec l'extrémité inférieure du mât associé reposant sur un organe de réception dédié ;
- les figures 11 et 12 représentent, vue de côté, une autre forme de réalisation du dispositif de manoeuvre verticale dans lequel est enserré un mât d'éolienne, cette dernière étant agencée, respectivement, au-dessus de l'engin de pose et en porte-à-faux dudit engin de pose ;
- les figures 13 et 14 représentent, vue de dessus et de manière isolée, le châssis constitutif du dispositif de manoeuvre verticale qui est manoeuvré, respectivement, en configuration ouverte et en configuration fermée.

### Engin de pose

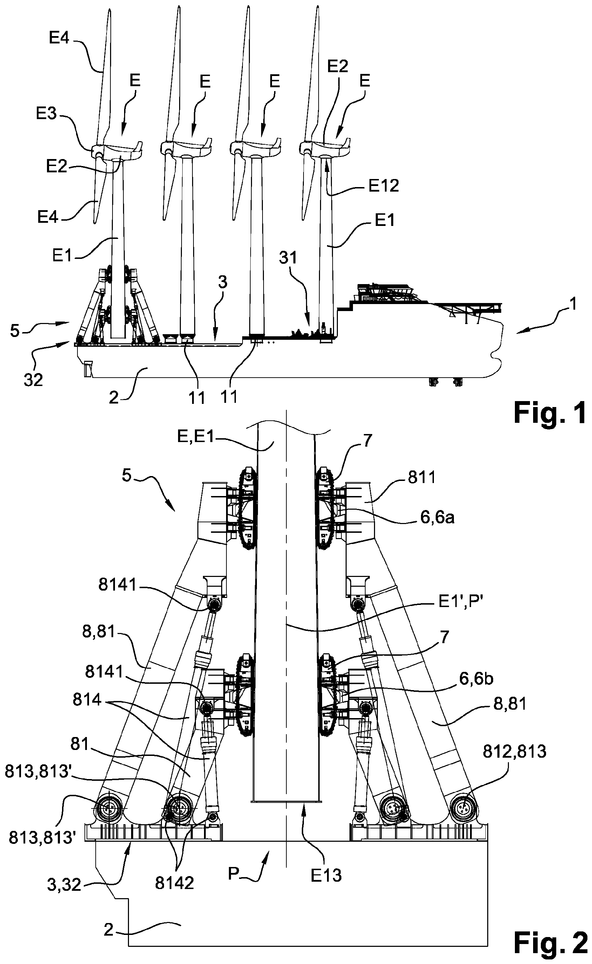

Sur les figures 1 à 5, on a représenté un engin 1 pour la pose d'éoliennes E, avantageusement d'éoliennes en mer E (ou « éolienne off-shore »).

Par « éolienne », on entend un dispositif qui transforme l'énergie cinétique du vent en énergie électrique.

Par « éolienne en mer », on entend une éolienne apte à résister à la force des vagues et du courant, et apte à résister à la corrosion due à l'humidité et la salinité.

Les éoliennes E, embarquées sur l'engin de pose 1, sont ici entièrement assemblées (ou préassemblées).

Une telle éolienne E se compose des principaux éléments suivants (figure 1) :
- un mât E1, généralement en acier,
- une nacelle E2, montée au sommet du mât E1, abritant les composants mécaniques, pneumatiques, certains composants électriques et électroniques, nécessaires au fonctionnement de la machine,
- un rotor E3, comportant plusieurs pales E4 (ici au nombre de trois) et fixé à la nacelle E2, et
- éventuellement une fondation R décrite plus en détails ci-après.

Le rotor E3 est entraîné par l'énergie du vent ; il est assemblé, directement ou indirectement, à un générateur électrique (non représenté).

Le mât E1, formant un élément allongé constitutif de l'éolienne E, comporte une surface périphérique cylindrique E11 définissant un axe longitudinal E1'.

La surface périphérique cylindrique E11 a avantageusement une section circulaire.

Selon l'invention, par « surface périphérique cylindrique E11 », on englobe notamment une surface périphérique cylindrique E11 présentant une forme générale de cylindre droit (section constante) et une surface périphérique cylindrique E11 présentant une forme générale tronconique (section croissante).

Dans le cas d'une surface périphérique cylindrique E11 tronconique, cette surface périphérique cylindrique E11 a une section croissante depuis une extrémité supérieure E12 portant la nacelle E2, jusqu'à une extrémité inférieure E13 destinée à reposer sur un organe de réception décrit par la suite.

Dans le cas présent, l'éolienne E est avantageusement une « grande éolienne », dont la puissance est avantageusement supérieure à 6 MW. L'engin de pose selon l'invention peut également être utilisé pour la pose d'éoliennes de plus petites tailles.

Par exemple, une grande éolienne E comporte un mât E1 dont la longueur est d'au moins 100 m (par exemple entre 100 m et 200 m) ; la section de ce mât E1 évolue progressivement depuis un diamètre inférieur à 6 m au niveau de son extrémité supérieure E12 jusqu'à un diamètre supérieur à 6 m au niveau de son extrémité inférieure E13 ; le rotor E3 avec ses pales E4 ont quant à eux avantageusement un diamètre d'au moins 100 m, par exemple entre 100 et 200 m.

L'engin de pose 1 consiste avantageusement en une structure flottante, par exemple un navire ou une plateforme off-shore. Cette structure flottante est apte à flotter sur une étendue d'eau, par exemple une mer ou un océan.

De manière alternative, non représentée, l'engin de pose pourrait également consister en une structure terrestre, munie de moyens de roulement sur le sol.

L'engin de pose 1 consiste ici en un navire comportant :
- un coque 2, servant de moyens de flottaison, et
- un pont 3 équipé d'un dispositif 5 pour la manoeuvre verticale de l'éolienne E, en particulier de son mât E1, désigné ci-après « dispositif de manoeuvre » ou « dispositif de manoeuvre verticale ».

Le pont 3 comporte une partie poupe 31 (avant) et une partie proue 32 (arrière).

La partie poupe 32 comporte un passage traversant 33, s'étendant verticalement et en regard d'un passage de circulation P défini par le dispositif de manoeuvre 5.

Le dispositif de manoeuvre 5 est apte à assurer, d'une part, une prise en charge par serrage d'un tronçon du mât E1 et, d'autre part, l'avancement piloté de ce dernier, pour permettre sa dépose d'une manière contrôlée sur un organe de réception (par exemple par une fondation décrite par la suite).

Un tel dispositif de manoeuvre 5 est du type de celui décrit par exemple dans le document FR-3 012 560.

Pour cela, ce dispositif de manoeuvre 5 comprend ici des châssis annulaires 6, portant chacun plusieurs caissons de guidage 7, pour le serrage d'un tronçon du mât E1 et son avancement contrôlé.

Les châssis annulaires 6 sont ici au nombre de deux : - un châssis annulaire supérieur 6a, et - un châssis annulaire inférieur 6b.

Les deux châssis annulaires 6a, 6b sont superposés ; ils sont agencés coaxialement et à distance l'un par rapport à l'autre.

Ils définissent ensemble un passage P pour la circulation du mât E1.

Ce passage de circulation P a une forme générale cylindrique, définissant un axe de passage P' s'étendant verticalement, ou au moins approximativement verticalement.

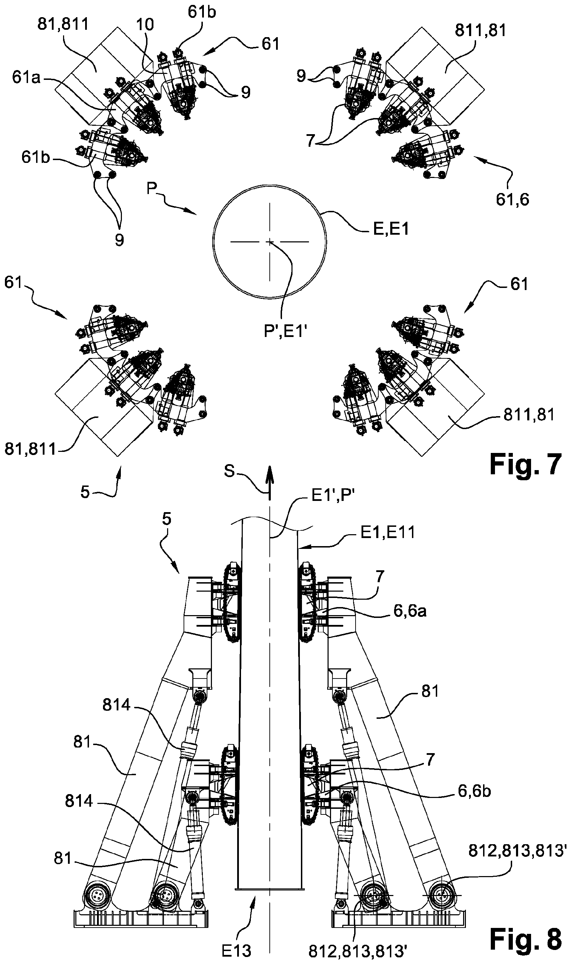

Chaque châssis annulaire 6 comprend ici plusieurs parties mobiles de châssis 61 (visibles en particulier sur la figure 7), en l'occurrence au nombre de quatre, chacune en forme générale d'arc de cercle.

Les parties mobiles de châssis 61 sont ici identiques, ou au moins approximativement identiques, les unes par rapport aux autres, qui portent chacune plusieurs caissons de guidage 7 régulièrement répartis.

Comme illustré sur la figure 7, chaque partie mobile de châssis 61 se compose elle-même de plusieurs modules 61a, 61b qui portent chacun l'un des caissons de guidage 7.

En l'espèce, selon la figure 7, chaque partie mobile de châssis 61 comprend trois modules identiques, ou au moins approximativement identiques, à savoir :
- un module central 61a, porté par des moyens de manoeuvre décrits ci-après, et
- deux modules latéraux 61b, portés par le module central 61a et agencés de part et d'autre de ce dernier.

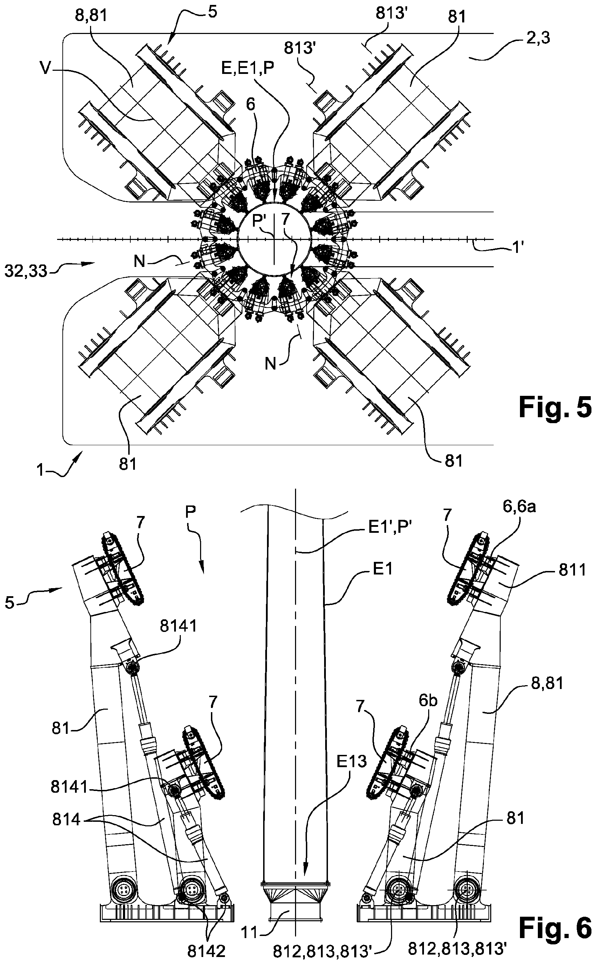

Les parties mobiles de châssis 61 des châssis 6 sont portées par des moyens de manoeuvre 8 entre deux configurations :
- une configuration fermée de pose (figures 1 à 5 notamment), pour former le châssis annulaire 6, et
- une configuration ouverte (figures 6 et 7) pour l'accès au passage de circulation P, dans laquelle les parties mobiles de châssis 61 sont écartées les unes des autres.

En l'espèce, selon la figure 2, les moyens de manoeuvre 8 comprennent un ensemble de jambes 81, basculantes, dont :
- l'extrémité supérieure 811 porte l'une des parties de châssis 61, et
- l'extrémité inférieure 812 coopère avec le pont 3 par le biais de moyens de liaison pivot 813 définissant un axe de rotation 813'.

Chaque partie mobile de châssis 61 est ainsi mobile en rotation autour de l'axe de rotation 813' de la jambe 81 associée.

Les jambes 81 sont régulièrement réparties autour de l'axe de passage P', en l'occurrence avec un secteur angulaire horizontal de 90° entre deux de ces jambes 81.

Les axes de rotation 813' s'étendent horizontalement, et chacun perpendiculairement par rapport à un plan vertical V passant par l'axe de passage P' et par la jambe 81 correspondante (figure 5).

Ces axes de rotation 813' s'étendent en plus à 45° par rapport au plan vertical médian 1' de l'engin de pose 1 (figure 5).

Chaque jambe 81 est associée à un actionneur 814 pour sa manoeuvre en rotation autour de son axe de rotation 813'.

Les actionneurs 814 consistent ici en des actionneurs linéaires, par exemple des vérins hydrauliques, dont une extrémité supérieure 8141 coopère avec la jambe 81 associée et dont une extrémité inférieure 8142 coopère avec le pont 3.

Les parties mobiles de châssis 61 comportent encore des moyens 9 pour le verrouillage mécaniques du châssis annulaire 6 correspondant en configuration fermée de pose (figure 7).

Ces moyens de verrouillage 9 sont pilotables entre deux états distincts :
- un état verrouillé mécaniquement (figure 5 notamment), dans lequel les parties mobiles de châssis 61 sont maintenues mécaniquement dans la configuration fermée, de sorte à participer à contrer les efforts tendant à une manoeuvre vers la configuration ouverte, et
- un état déverrouillé (notamment figure 7), dans lequel les parties mobiles de châssis 61 sont aptes à être manoeuvrées entre les configurations ouverte et fermée.

Les moyens de verrouillage 9 consistent, par exemple, en au moins un vérin de verrouillage associé à une broche manoeuvrable dans une position active au sein d'orifices complémentaires venant en correspondance.

Au sein de chaque châssis annulaire 6 en configuration fermée, les caissons de guidage 7 sont agencés autour de l'axe de passage P', régulièrement répartis angulairement.

Le nombre de caissons de guidage 7 au sein de chaque châssis annulaire 6 est avantageusement d'au moins quatre, par exemple entre 10 et 15.

Chaque partie mobile de châssis 61 porte également plusieurs de ces caissons de guidage 7 (en l'occurrence trois caissons de guidage 7 par partie mobile de châssis 61).

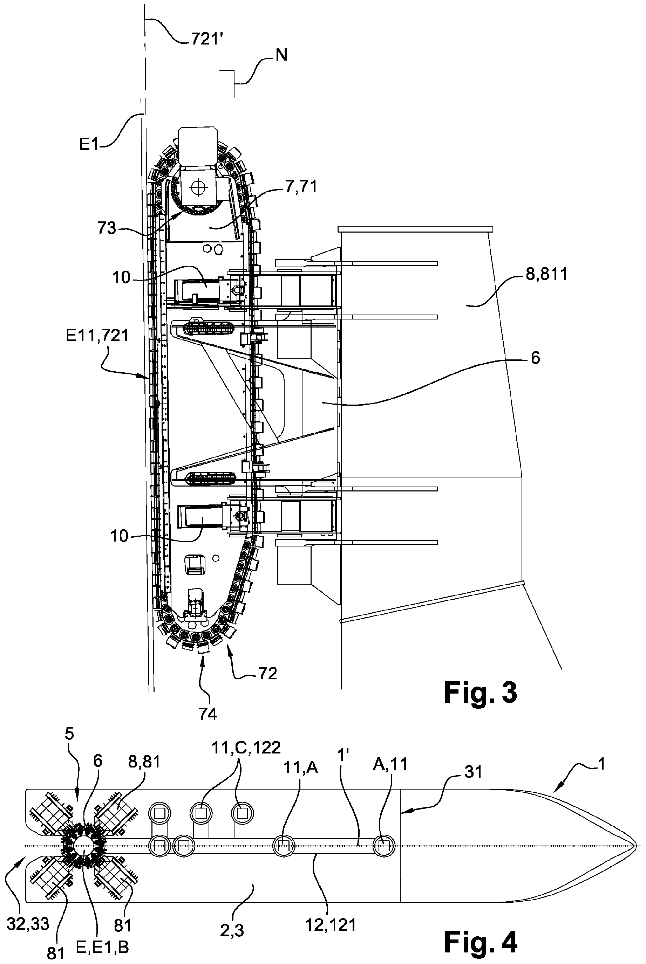

L'un des caissons de guidage 7 est représenté en détails sur la figure 3. Les autres caissons de guidage 7 sont identiques.

Le caisson de guidage 7 comprend un corps support allongé 71 sur lequel est guidée en translation une chaîne de guidage 72 qui est entraînée par au moins une roue motorisée 73.

Chaque chaîne de guidage 72 comporte avantageusement une pluralité de patins 74 réalisés en un matériau élastomère, par exemple en matériau caoutchouc, destinés à venir au contact de la surface périphérique cylindrique du mât E1.

Chaque patin 74 a par exemple une longueur et une largeur comprise entre 150 et 300 mm.

Cette caractéristique technique permet d'éviter une détérioration de la surface périphérique cylindrique E11 du mât E1, en particulier de son revêtement (généralement une peinture), lors du serrage et de l'avancement.

Chaque chaîne de guidage 72 s'étend dans un plan vertical N passant par l'axe de passage P' (figure 5).

En particulier, la chaîne de guidage 72 comporte un brin frontal 721 s'étendant verticalement, ou au moins approximativement verticalement, et en regard de l'axe de passage P', pour constituer la surface de contact (sous forme d'une ligne de contact) avec un tronçon du mât E1 à déposer (figure 3).

Ce brin frontal 721 a par exemple une longueur comprise entre 4 et 8 m.

Les caissons de guidage 7 d'un châssis annulaire 6 en configuration fermée sont ainsi destinés à exercer une pluralité de segments de contact répartis selon des génératrices de la surface périphérique cylindrique E11 du mât E1.

Des moyens de pilotage sont prévus pour piloter le cheminement synchrone, et dans un même sens, de ces brins frontaux 721.

Ces moyens de pilotage (non représentés) consistent par exemple en des moyens électroniques et/ou informatiques classiques en soi, commandant les roues motorisées 73 des différents caissons de guidage 7.

Les caissons de guidage 7 sont solidarisés avec leur châssis annulaire 6, en particulier leur partie mobile de châssis 61, par l'intermédiaire de moyens de manoeuvre et de serrage 10 (figure 3) qui assurent un pilotage en translation de ce caisson 7 parallèlement à lui-même, radialement et selon une direction perpendiculaire à l'axe de passage P'.

Les moyens de manoeuvre et de serrage 10 consistent avantageusement en des actionneurs linéaires, par exemple du type vérin électrique ou du type vérin hydraulique.

Lorsque le châssis annulaire 6 est en configuration fermée, ces moyens de manoeuvre et de serrage 10 permettent ainsi une manoeuvre de chaque caisson de guidage 7 entre deux positions de fin de course :
- une position de fin de course rétractée, dans laquelle la distance entre son brin frontal 721 et l'axe de passage P' est maximale, et
- une position de fin de course déployée, dans laquelle la distance entre son brin frontal 721 et l'axe de passage P' est minimale.

De manière avantageuse, l'ensemble des moyens de manoeuvre et de serrage 10, associés aux différents caissons de guidage 7, sont pilotés de manière synchrone.

Les brins frontaux 721 définissent ainsi un cercle virtuel qui est concentrique avec l'axe de passage P', et dont le diamètre est variable lors de la manoeuvre de ces caissons de guidage 7 entre leurs positions de fin de course.

Ces moyens de manoeuvre et de serrage 10 autorisent avantageusement une variation angulaire de l'axe longitudinal 721' du brin frontal 721 par rapport à l'axe de passage P' et par rapport à la verticale.

Cette variation angulaire peut être horaire ou antihoraire, avec par exemple un angle compris entre +/- 5° entre l'axe longitudinal 721' du brin frontal 721 et l'axe de passage P'.

Cette caractéristique technique est en particulier intéressante pour tenir compte de la variation de section du mât E1 sur sa longueur.

Par ailleurs, pour le transport et la manutention des éoliennes E, l'engin de pose 1 comporte avantageusement des organes de convoyage 11 qui sont chacun aptes, d'une part, à recevoir l'extrémité inférieure E13 d'un mât E1 et, d'autre part, à porter ce mât E1 verticalement ou au moins approximativement verticalement (comme illustré sur les figures 1 et 6).

Chaque organe de convoyage 11 consiste avantageusement en un chariot qui a une forme générale similaire à celle de l'organe de réception final de sorte à permettre la fixation de l'extrémité inférieure E13 du mât E1 (par exemple par boulonnage et/ou par soudure).

Les organes de convoyage 11 sont portés par des rails de guidage 12 ménagés sur le pont 3 (figure 4), de sorte à autoriser leur mobilité horizontale en translation entre différentes positions :
- une position de stockage, illustrée par le repère A sur la figure 4, sur la longueur d'un rail longitudinal principal 121 ménagé sur le plan longitudinal médian 1' et situé hors du dispositif de manoeuvre 5, dans laquelle cet organe de convoyage 11 est destiné à porter un mât E1,
- une position de présentation, illustrée par le repère B sur la figure 4, dans laquelle cet organe de convoyage 11 est agencé pour présenter son mât E1 associé au sein du dispositif de manoeuvre 5, et
- une position de garage, illustrée par le repère C sur la figure 4, formée par des rails transversaux secondaires 122 au sein desquels l'un des organes de convoyage 11 est agencé pour autoriser la circulation d'un organe de convoyage 11 suivant (en amont) jusqu'au dispositif de manoeuvre 5.

### Procédé de pose

La présente invention concerne encore le procédé pour la pose d'au moins du mât E1 d'une éolienne E, voire d'une grande éolienne E préassemblée.

Un tel pré-assemblage s'effectue avantageusement au sol, ce qui a l'intérêt d'être plus simple techniquement et moins risqué sur le plan humain et matériel, par rapport à un assemblage sur le site de pose (notamment en mer).

De manière générale, ce procédé de pose comprend au moins une opération de manoeuvre en translation verticale du mât E1, qui est effectuée au moyen du dispositif de manoeuvre 5 précité.

De telles opérations de manoeuvre en translation verticale sont obtenues par un cheminement synchrone, et dans un même sens, des brins frontaux 721 des caissons de guidage 7 en appui sur la surface périphérique cylindrique E11 du mât E1.

En l'espèce, l'engin de pose 1 porte plusieurs éoliennes E préassemblées, qui sont chacune installées sur l'un des organes de convoyage 11 (figure 1).

Ces organes de convoyage 11 sont en position de stockage A, répartis en série sur la longueur du rail longitudinal principal 121 (figure 2).

Chaque organe de convoyage 11 porte l'extrémité inférieure E13 d'un mât E1, ce dernier s'étendant verticalement ou au moins approximativement verticalement (comme illustré sur la figure 6).

Pour la prise en charge de l'une des éoliennes E en vue de sa pose, l'éolienne E en aval (du côté du passage traversant 33 et du dispositif de manoeuvre 5) est soumise à une opération de convoyage pour être agencée au sein des châssis annulaires 6 en configuration ouverte (figure 6).

Pour cela, l'organe de réception 11 en aval est déplacé sur la longueur du rail longitudinal principal 121, vers l'aval, jusqu'au passage traversant 33 et dans l'encombrement du passage de circulation P.

Le mât E1 est déplacé en translation horizontale avec son axe longitudinal E1' maintenu verticalement, ou au moins approximativement verticalement.

En fin de course, l'organe de réception 11 occupe la position de présentation B (figure 4), en porte-à-faux au-dessus du passage traversant 33.

L'organe de convoyage 11 est ainsi agencé pour présenter son mât E1 associé au sein du dispositif de manoeuvre 5 (figures 6 et 7).

L'axe longitudinal E1' du mât E1 s'étend alors coaxialement à l'axe de passage P' (figures 6 et 7).

On effectue ensuite une opération de pilotage des châssis annulaires 6 en configuration fermée depuis la configuration ouverte, par basculement en rapprochement autour de leurs axes de rotation respectifs 813'.

Les caissons de guidage 7 se situent ici du côté de leur position de fin de course rétractée ; les brins frontaux 721 se trouvent alors à distance de la surface périphérique E11 du mât E1.

Les moyens de verrouillage 9 sont pilotés en position active, de sorte à obtenir l'état verrouillé des parties mobiles de châssis 61.

Les châssis annulaires 6 en configuration fermée entourent alors le mât E1 sur deux niveaux, superposés et à distance l'un de l'autre (figure 8).

Les caissons de guidage 7 sont ensuite manoeuvrés en direction de l'axe de passage P', de manière synchrone, par le biais des moyens de manoeuvre et de serrage 10 (vers leurs positions de fin de course déployée).

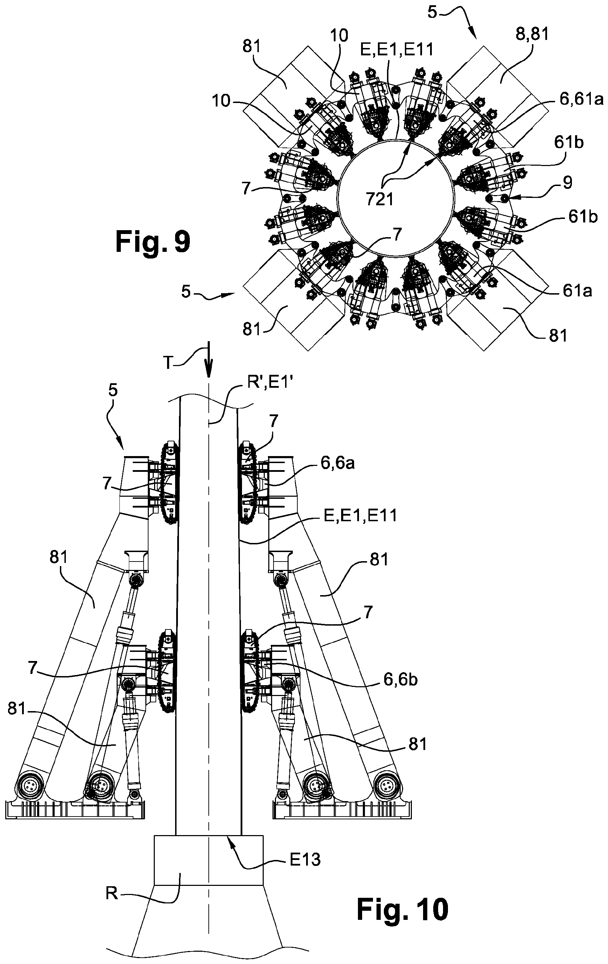

Cette manoeuvre en rapprochement est poursuivie jusqu'à ce que le mât E1 soit efficacement enserré par les brins frontaux 721 de ces caissons de guidage 7 (figures 8 et 9), notamment avec une pression suffisante répartie sur chacun d'eux pour porter tout le poids de l'éolienne E.

Les brins frontaux 721 sont ainsi régulièrement répartis sur la surface périphérique cylindrique E11, autour de l'axe longitudinal E1' du mât E1 et selon une pluralité de segments de génératrice.

La pression exercée par ces brins frontaux 721 est ajustée par le biais des moyens de manoeuvre et de serrage 10 associés.

Dans cette configuration, les brins frontaux 721 des caissons de guidage 7 sont manoeuvrés de sorte à cheminer de manière synchrone, dans un sens ascendant illustré par la flèche S sur la figure 8.

Il est ainsi obtenu une opération de manoeuvre verticale ascendante du mât E1, par le biais du dispositif de manoeuvre 5, de manière à séparer et à écarter l'extrémité inférieure E13 de ce mât E1 par rapport à son organe de convoyage 11.

Le mât E1 se déplace ainsi vers le haut par rapport au dispositif de manoeuvre 5, coaxialement à l'axe de passage P', avec les brins frontaux 721 cheminant en direction de l'extrémité inférieure E13 de ce mât E1.

Le déplacement vers le haut s'effectue par exemple sur une hauteur comprise entre 1 et 3 m.

L'organe de convoyage 11 libéré est alors entrainé dans sa position de garage C.

Parallèlement, le procédé comprend une opération de positionnement de l'engin de pose 1 de sorte que l'extrémité inférieure E13 du mât E1 vienne en regard d'un organe de réception R.

En l'espèce, cet organe de réception R consiste avantageusement en une fondation reposant sur le fond marin, choisie par exemple parmi une fondation monopieu, une fondation gravitaire, une fondation tripode et une fondation « jacket ».

Lors de ce positionnement, l'axe de passage P' et l'axe longitudinal E1' du mât E1 sont agencés coaxialement, ou au moins approximativement coaxialement, par rapport à un axe de pose R' défini par l'organe de réception R (figure 10).

Dans cette configuration, les brins frontaux 721 des caissons de guidage 7 sont encore manoeuvrés de sorte à cheminer de manière synchrone, maintenant dans un sens descendant.

Le mât E1 subit alors une opération de manoeuvre verticale descendante, illustrée par la flèche T sur la figure 10, par le biais du dispositif de manoeuvre 5, jusqu'à poser son extrémité inférieure E13 sur l'organe de réception R en regard.

Le mât E1 se déplace ainsi vers le bas par rapport au dispositif de manoeuvre 5, coaxialement à l'axe de passage P', avec les brins frontaux 721 cheminant en direction de l'extrémité supérieure E12 de ce mât E1.

Le déplacement vers le bas s'effectue par exemple sur une hauteur comprise entre 1 et 20 m.

Au cours de cette opération de manoeuvre verticale descendante, notamment en raison de la houle, il est possible que l'organe de réception R vienne exercer une poussée sur l'extrémité inférieure E13 du mât E1.

Pour éviter une détérioration de l'éolienne E, le dispositif de manoeuvre 5 autorise une manoeuvre verticale ascendante du mât E1 si une telle poussée survient.

Pour cela, le couple moteur au niveau des roues motorisées 73 est ajusté pour porter seulement le poids de l'éolienne E prise en charge.

Une fois l'extrémité inférieure E13 de l'éolienne E en appui sur l'organe de réception R, les roues motorisées 73 peuvent être débrayées pour autoriser un jeu en translation verticale des caissons de guidage 7 sur la longueur de son mât E1.

Le mât E1 est ainsi libre en translation coaxialement à l'axe de passage P'.

Une opération de fixation peut être mise en oeuvre pour solidariser l'extrémité inférieure E13 du mât E1 sur l'organe de réception R.

Pour écarter le dispositif de manoeuvre 5, on réalise les opérations successives suivantes :
- une opération de pilotage des caissons de guidage 7 en direction de leur position de fin de course rétractée, cela par le biais de leurs moyens de manoeuvre et de serrage 10 associés, de manière à écarter leurs brins frontaux 721 par rapport à la surface périphérique cylindrique E11 du mât E1,
- une opération de pilotage des parties mobiles de châssis 61 en état déverrouillé, puis
- une opération de pilotage des châssis annulaires 6 en configuration ouverte, par un basculement en écartement autour de leurs axes de rotation 813' respectifs, de sorte que le mât E1 soit libéré par rapport au dispositif de manoeuvre 5.

L'engin de pose 1 est alors piloté pour s'écarter de l'éolienne E posée.

Les opérations de ce procédé de pose sont renouvelées pour l'installation successive des éoliennes E embarquées sur l'engin de pose 1, avant le chargement d'un nouveau lot d'éoliennes E à poser.

L'engin de pose 1 pourrait être utilisé, de la même manière, pour la pose d'une fondation de forme tubulaire, constitutive également de l'éolienne, manoeuvrée verticalement par le dispositif de manoeuvre 5.

### Autre forme de réalisation de l'engin de pose, et mise en oeuvre

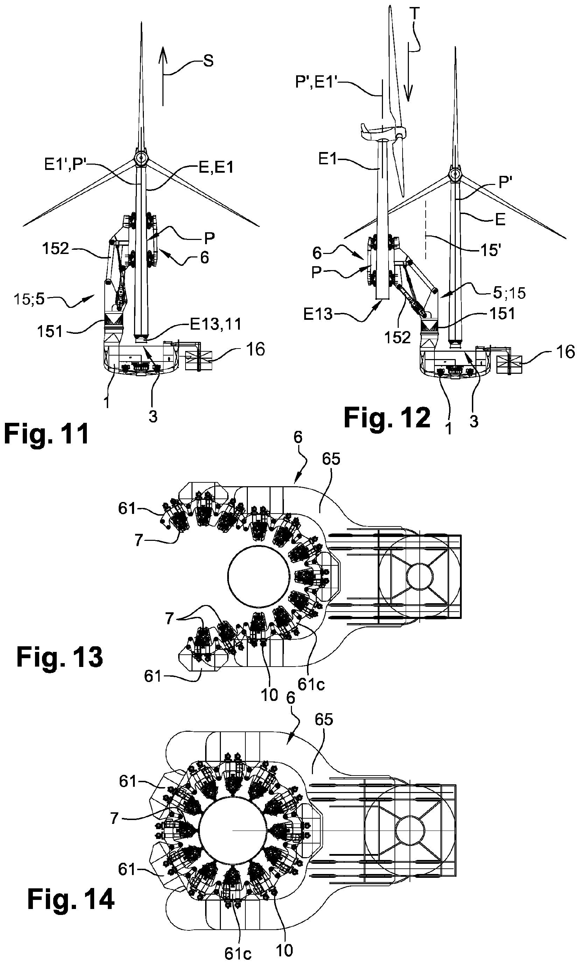

Sur les figures 11 et 12, on a représenté un engin 1 pour la pose d'éoliennes E, avantageusement d'éoliennes en mer E (ou « éolienne off-shore »), similaire à celui décrit ci-dessus en relation avec les figures 1 à 10.

L'engin de pose 1 consiste également en un navire comportant un pont 3 équipé d'une autre forme de réalisation du dispositif de manoeuvre verticale 5, similaire à celui décrit ci-dessus.

Ce dispositif de manoeuvre 5 comprend également des châssis annulaires 6, portant chacun plusieurs caissons de guidage 7, pour le serrage d'un tronçon du mât E1 et son avancement contrôlé.

Les châssis annulaires 6 sont toujours au nombre de deux : - un châssis annulaire supérieur, et - un châssis annulaire inférieur.

Les châssis annulaires 6, et par conséquence l'axe de passage P', sont ici aptes à être déplacés dans l'espace par le biais de moyens de manoeuvre 15.

Les moyens de manoeuvre 15 permettent notamment une manoeuvre horizontale des châssis annulaires 6 entre deux positions :
- une position rétractée, dans laquelle les châssis annulaires 6 s'étendent au-dessus du pont 3 (figure 11), et
- une position déployée, dans laquelle les châssis annulaires 6 s'étendent en porte-à-faux par rapport à ce pont 3, au-dessus de l'eau (figure 12).

Le passage traversant 33, décrit ci-dessus en relation avec les figures 1 à 10, est alors optionnel.

Pour assurer sa stabilité, l'engin de pose 1 peut avantageusement être équipé d'un ballast 16 déployable (un réservoir d'eau de grande contenance, destiné à être rempli ou vidangé d'eau de mer afin d'optimiser la stabilité).

Ces moyens de manoeuvre 15 sont ainsi aptes à manoeuvrer en rotation les châssis annulaires 6 autour d'un axe vertical 15' (comme illustré par le passage entre les figures 11 et 12).

Ces moyens de manoeuvre 15 sont également aptes à déplacer en hauteur les châssis annulaires 6 par rapport au pont 3, notamment pour s'adapter à la hauteur de la structure de réception.

En l'espèce, ces moyens de manoeuvre 15 se présentent sous la forme d'une grue, avec :
- une base pivotante 151, solidarisée avec le pont 3 et définissant le degré de liberté en rotation selon l'axe vertical 15',
- un système de parallélogramme déformable 152, formant la flèche de cette grue 15, interposé entre ladite base 151 et les châssis annulaires 6.

La manoeuvre en rotation de la base pivotante 151 (avantageusement sur au moins 180°) est assurée par des moyens moteurs hydrauliques ou électriques.

La manoeuvre du système de parallélogramme déformable 152 en élévation (apiquage), pour ajuster la hauteur des châssis annulaires 6 par rapport au pont 3, est assurée par un système de vérins hydrauliques 153.

Ce système de parallélogramme déformable 152 est ainsi mobile sur un secteur angulaire vertical de l'ordre de 90°.

Un tel système de parallélogramme déformable 152 permet, de manière automatique et constante, un maintien de l'axe de passage P' parallèlement à lui-même (avantageusement verticalement).

Tel qu'illustré sur les figures 13 et 14, chaque châssis annulaire 6 comprend ici une partie fixe de châssis 65 et deux parties mobiles de châssis 61.

La partie fixe de châssis 65, en forme générale de U, comprend plusieurs modules 61c qui portent chacun l'un des caissons de guidage 7.

Ces caissons de guidage 7 sont répartis selon une forme générale de demi-cercle.

Les parties mobiles de châssis 61 sont ménagées en regard de l'ouverture de cette partie fixe de châssis 65, et de part et d'autre de cette dernière.

Ces parties mobiles de châssis 61 sont du type battant, avec un degré de liberté en rotation.

Chaque partie mobile de châssis 61 comprend elle-même plusieurs modules qui portent chacun l'un des caissons de guidage 7 : au nombre de deux modules pour l'une des parties mobiles et au nombre de trois modules pour l'autre partie mobile.

Les parties mobiles de châssis 61 des châssis 6 sont ainsi manoeuvrables en rotation entre deux configurations :
- une configuration fermée de pose (figure 14), pour former le châssis annulaire 6, et
- une configuration ouverte (figure 13) pour l'accès au passage de circulation P.

Les parties mobiles de châssis 61 comportent encore les moyens pour le verrouillage mécanique du châssis annulaire 6 correspondant en configuration fermée de pose.

Les caissons de guidage 7, et les moyens de manoeuvre et de serrage 10, sont identiques à ceux décrits ci-dessus en relation avec les figures 1 à 10.

La mise en oeuvre de ce dispositif de manoeuvre 5 est similaire à celle décrite ci-dessus en relation avec les figures 1 à 10.

En pratique, dans cette forme de réalisation, l'organe de convoyage 11 est ainsi agencé pour présenter son mât E1 associé au sein du dispositif de manoeuvre 5 en position rétractée (figure 11) et en configuration ouverte (figure 13).

L'axe longitudinal E1' du mât E1 s'étend alors coaxialement à l'axe de passage P'.

On effectue ensuite une opération de pilotage des châssis annulaires 6 en configuration fermée (figure 14) depuis la configuration ouverte (figure 13), par pivotement en rapprochement des parties mobiles de châssis 61.

Dans cette configuration, les brins frontaux 721 des caissons de guidage 7 sont manoeuvrés de sorte à cheminer de manière synchrone, dans un sens ascendant illustré par la flèche S sur la figure 11.

Il est ainsi obtenu une opération de manoeuvre verticale ascendante du mât E1, par le biais du dispositif de manoeuvre 5, de manière à séparer et à écarter l'extrémité inférieure E13 de ce mât E1 par rapport à son organe de convoyage 11.

Le dispositif de manoeuvre 5 et l'éolienne E sont ensuite manoeuvrés, éventuellement en position déployée (figure 12). Le ballast 15 est, si nécessaire, déployé et rempli d'eau pour assurer la stabilité.

Lors de ce positionnement, l'axe de passage P' et l'axe longitudinal E1' du mât E1 sont agencés coaxialement, ou au moins approximativement coaxialement, par rapport à un axe de pose R' défini par l'organe de réception R (ici non représenté sur la figure 12).

Parallèlement, l'apiquage de la grue 15 peut être ajusté pour manoeuvrer en hauteur l'éolienne E, de sorte à ajuster la hauteur de son extrémité inférieure E13 par rapport à l'organe de réception R en regard.

Dans cette configuration, les brins frontaux 721 des caissons de guidage 7 sont encore manoeuvrés de sorte à cheminer de manière synchrone, maintenant dans un sens descendant.

Le mât E1 subit alors une opération de manoeuvre verticale descendante, illustrée par la flèche T sur la figure 12, par le biais du dispositif de manoeuvre 5, jusqu'à poser son extrémité inférieure E13 sur l'organe de réception R en regard.

Une opération de fixation peut être mise en oeuvre pour solidariser l'extrémité inférieure E13 du mât E1 sur l'organe de réception R.

Pour écarter ensuite le dispositif de manoeuvre 5, on réalise notamment :
- une opération de pilotage des parties mobiles de châssis 61 en configuration ouverte (figure 13), puis
- une opération de pilotage des châssis annulaires 6 par le biais des moyens de manoeuvre 15, le cas échéant vers la configuration rétractée (figure 11), éventuellement pour la prise en charge d'une nouvelle éolienne E.

De manière générale, l'engin de pose 1 selon l'invention peut être équipé d'un système de compensation de houle (non représenté).

Le système de compensation permet de corriger le mouvement relatif de l'engin de pose 1 par rapport au support où vient se poser l'éolienne, grâce à une régulation à façon et permanente du dispositif de manoeuvre 5.

Ce système de compensation peut pour cela :
- piloter le cheminement synchrone des brins frontaux 721 des caissons de guidage 7 et/ou
- le cas échéant, piloter les moyens de manoeuvre 15 en forme de grue, notamment en ajustant l'apiquage de la grue 15.

Pour cela, ce système de compensation peut consister en un programme d'ordinateur comprenant des moyens de code de programme pour piloter le cheminement synchrone des brins frontaux 721 des caissons de guidage 7 en fonction de la houle et/ou, le cas échéant, des moyens de code de programme pour piloter les moyens de manoeuvre 15 en fonction de la houle, lorsque ledit programme est exécuté sur un ordinateur.

Le système de compensation peut encore comprendre des instruments de mesure de la houle, par exemple des bouées houlographes, perches à houle, radars à houle, marégraphes haute fréquence, courantomètres, radars.

Encore de manière générale, de tels procédés et engins ont l'intérêt de permettre une pose rapide et efficace d'éoliennes, avantageusement préassemblées au sol.

## Revendications

1. Procédé pour la pose d'au moins un élément allongé constitutif d'une éolienne, en particulier un mât d'éolienne, comportant une surface périphérique cylindrique (E11),
ledit procédé de pose comprend au moins une opération de manoeuvre en translation verticale dudit au moins un élément allongé (E1) qui est effectuée au moyen d'un dispositif de manoeuvre (5) adapté au serrage et à l'avancement contrôlés dudit élément allongé (E1),
lequel dispositif de manoeuvre (5) comprend au moins un châssis annulaire (6) qui définit un passage (P) pour la circulation dudit élément allongé (E1), suivant un axe de passage (P') s'étendant verticalement, ou au moins approximativement verticalement,
**caractérisé en ce que**
lequel au moins un châssis annulaire (6) porte plusieurs caissons de guidage (7) agencés autour dudit axe de passage (P'),
lesquels caissons de guidage (7) comprennent chacun un corps support allongé (71) sur lequel est guidée en translation une chaîne de guidage (72) qui est entraînée par au moins une roue motorisée (73),
laquelle chaîne de guidage (72), s'étendant dans un plan passant par ledit axe de passage (P'), comporte un brin frontal (721) s'étendant verticalement ou au moins approximativement verticalement et en regard dudit axe de passage (P'), pour prendre appui sur ladite surface périphérique cylindrique (E11) dudit élément allongé (E1),
laquelle au moins une opération de manoeuvre en translation verticale est obtenue par un cheminement synchrone, et dans un même sens, desdits brins frontaux (721).

2. Procédé de pose, selon la revendication 1, **caractérisé en ce que** ledit au moins un châssis annulaire (6) comprend au moins deux parties mobiles de châssis (61) qui portent chacune l'un au moins desdits caissons de guidage (7),
lesquelles au moins deux parties mobiles de châssis (61) sont manoeuvrables entre une configuration fermée de pose et une configuration ouverte d'accès audit passage de circulation (P).

3. Procédé de pose, selon la revendication 2, **caractérisé en ce que**, en configuration fermée, lesdites au moins deux parties mobiles de châssis (61) sont pilotables entre un état verrouillé mécaniquement et un état déverrouillé.

4. Procédé de pose, selon l'une quelconque des revendications 2 ou 3, **caractérisé en ce qu'**il comprend :
- une opération de convoyage dudit élément allongé (E1) au sein dudit au moins un châssis annulaire (6) en configuration ouverte, au cours de laquelle ledit élément allongé (E1) est déplacé en translation horizontale, avec, d'une part, son axe longitudinal (E1') orienté verticalement, ou au moins approximativement verticalement et, d'autre part, son extrémité inférieure (E13) reposant sur un organe de convoyage (11),
- une opération de pilotage dudit au moins un châssis annulaire (6) en configuration fermée, de sorte que ledit élément allongé (E1) soit enserré par ledit dispositif de manoeuvre (5), et le cas échéant une opération de pilotage desdites au moins deux parties mobiles de châssis (61) en état verrouillé,
- une opération de manoeuvre verticale ascendante dudit élément allongé (E1), par le biais dudit dispositif de manoeuvre (5), de manière à séparer ledit élément allongé (E1) par rapport audit organe de convoyage (11),
- une opération de positionnement de l'axe de passage (P') coaxialement, ou au moins approximativement coaxialement, à un axe de pose (R') défini par un organe de réception (R),
- une opération de manoeuvre verticale descendante dudit élément allongé (E1), par le biais dudit dispositif de manoeuvre (5), de manière à poser l'extrémité inférieure dudit élément allongé (E1) sur ledit organe de réception (R),
- une opération de fixation de ladite extrémité inférieure (E13) dudit élément allongé (E1) sur ledit organe réception (R),
- le cas échéant, une opération de pilotage desdites au moins deux parties mobiles de châssis (61) en état déverrouillé, et
- une opération de pilotage dudit au moins un châssis annulaire (6) en configuration ouverte, de sorte que ledit élément allongé (E1) soit libéré par rapport audit dispositif de manoeuvre (5).

5. Procédé de pose, selon la revendication 4, **caractérisé en ce que**, au cours de l'opération de manoeuvre verticale descendante dudit élément allongé (E1), ledit dispositif de manoeuvre (5) autorise une manoeuvre verticale ascendante dudit élément allongé (E1), cela en cas d'une poussée exercée par ledit organe de réception (R) sur l'extrémité inférieure (E13) dudit élément allongé (E1).

6. Procédé de pose, selon l'une quelconque des revendications 1 à 5, **caractérisé en ce que** :
- l'élément allongé (E1) consiste en un mât d'éolienne off-shore,
- le dispositif de manoeuvre (5) équipe un engin flottant, et
- la pose consiste en une pose de l'extrémité inférieure (E13) dudit élément allongé (E1) sur un organe de réception (R) consistant en une fondation reposant sur le fond marin.

7. Engin pour la pose d'au moins un élément allongé (E1) constitutif d'une éolienne, en particulier un mât d'éolienne, comportant une surface périphérique cylindrique (E11),
lequel engin comporte un dispositif (5) pour la manoeuvre verticale dudit élément allongé (E1),
ledit dispositif de manoeuvre (5) verticale, pour le serrage et l'avancement contrôlés dudit élément allongé (E1), comprend au moins un châssis annulaire (6) qui définit un passage (P) pour la circulation dudit élément allongé (E1), suivant un axe de passage (P') s'étendant verticalement, ou au moins approximativement verticalement,
**caractérisé en ce que**
lequel au moins un châssis annulaire (6) porte plusieurs caissons de guidage (7) agencés autour dudit axe de passage (P'),
lesquels caissons de guidage (7) comprennent chacun un corps support allongé (71) sur lequel est guidée en translation une chaîne de guidage (72) qui est entraînée par au moins une roue motorisée (73),
laquelle chaîne périphérique de guidage (72), s'étendant dans un plan passant par ledit axe de passage (P'), comporte un brin frontal (721) s'étendant verticalement ou au moins approximativement verticalement et en regard dudit axe de passage (P'), pour prendre appui sur ledit élément allongé (E1),
lequel dispositif de manoeuvre (5) comprend des moyens pour piloter un cheminement synchrone, et dans un même sens, desdits brins frontaux (721).

8. Engin de pose, selon la revendication 7, **caractérisé en ce que** ledit au moins un châssis annulaire (6) comprend au moins deux parties mobiles de châssis (61) qui comprennent chacune l'un au moins desdits caissons de guidage (7),
lesquelles au moins deux parties mobiles de châssis (61) sont associées à des moyens de manoeuvre (8) entre une configuration fermée de pose et une configuration ouverte d'accès audit passage de circulation.

9. Engin de pose, selon la revendication 8, **caractérisé en ce que** lesdites au moins deux parties mobiles de châssis (61) comportent des moyens de verrouillage mécanique (9) en configuration fermée de pose, lesquels moyens de verrouillage sont pilotables entre un état verrouillé mécaniquement et un état déverrouillé.

10. Engin de pose, selon l'une quelconque des revendications 7 à 9, **caractérisé en ce que** les caissons de guidage (7) sont solidarisés avec ledit au moins un châssis annulaire (6) par le biais de moyens (10) autorisant une variation angulaire de l'axe longitudinal (721') du brin frontal (721) par rapport à l'axe de passage (P').

11. Engin de pose, selon l'une quelconque des revendications 7 à 10, **caractérisé en ce qu'**il comporte au moins un organe de convoyage (11) qui est apte à recevoir l'extrémité inférieure (E13) d'un élément allongé (E1) et qui est apte à porter ledit élément allongé (E1) verticalement ou au moins approximativement verticalement,
lequel au moins un organe de convoyage (11) est mobile dans différentes positions au sein dudit engin (1) :
- une position de stockage (A), située hors dudit dispositif de manoeuvre (5) et dans laquelle ledit organe de convoyage (11) est destiné à porter un élément allongé (E1),
- une position de présentation (B), dans laquelle ledit organe de convoyage (11) est agencé pour présenter ledit élément allongé (E1) associé au sein dudit dispositif de manoeuvre (5), et
- une position de garage (C), dans laquelle ledit organe de convoyage (11) est agencé pour autoriser la circulation d'un autre organe de convoyage (11) jusqu'au dispositif de manoeuvre (5).

12. Engin de pose, selon l'une quelconque des revendications 7 à 11, **caractérisé en ce que** le dispositif de manoeuvre (5) comporte au moins deux châssis annulaires (6) superposés et coaxiaux,
et **en ce que** chaque châssis annulaire (6) comporte au moins quatre caissons de guidage (7).

13. Engin de pose, selon l'une quelconque des revendications 7 à 12, **caractérisé en ce que** ledit engin (1) consiste en un navire comportant :
- des moyens de flottaison (2), et
- un pont (3) équipé dudit dispositif de manoeuvre (5).

## Patentansprüche

1. Verfahren für den Aufbau wenigstens eines länglichen Elements einer Windkraftanlage, insbesondere eines Masts der Windkraftanlage, das eine zylindrische Mantelfläche (E11) aufweist, wobei das Aufbauverfahren für den Aufbau wenigstens einen Vorgang des senkrechten translatorischen Bewegens des wenigstens einen länglichen Elements (E1) aufweist, der mittels einer Bewegungsvorrichtung (5) ausgeführt wird, die zum Festklemmen und zum kontrollierten Voranbringen des länglichen Elements (E1) ausgelegt ist,
wobei die Bewegungsvorrichtung (5) wenigstens ein ringförmiges Chassis (6) aufweist, das einen Durchlaß (P) für die Bewegung des länglichen Elements (E1) entlang einer sich senkrecht oder wenigstens näherungsweise senkrecht erstreckenden Durchlaßachse (P') definiert,
**dadurch gekennzeichnet, daß** das wenigstens eine ringförmige Chassis (6) mehrere um die Durchlaßachse (P') herum angeordnete Führungskästen (7) trägt,
wobei die Führungskästen (7) jeweils einen länglichen Stützkörper (71) aufweisen, an dem eine Führungskette (72) translatorisch geführt wird, die von wenigstens einem motorisierten Rad angetrieben wird,
wobei die sich in einer durch die Durchlaßachse (P') gehenden Ebene erstreckende Führungskette (72) ein vorderes Trum (721) aufweist, das sich senkrecht oder wenigstens näherungsweise senkrecht und gegenüber der Durchlaßachse (P') erstreckt, um sich auf der zylindrischen Mantelfläche (E11) des länglichen Elements (E1) abzustützen,
wobei der wenigstens eine senkrechte translatorische Bewegungsvorgang durch eine synchrone und in derselben Richtung erfolgende Wegführung der vorderen Trums erhalten wird.

2. Aufbauverfahren gemäß Anspruch 1, **dadurch gekennzeichnet, daß** das wenigstens eine ringförmige Chassis (6) wenigstens zwei bewegliche Chassisteile (61) aufweist, die jeweils wenigstens einen der Führungskästen (7) tragen,
wobei die wenigstens zwei beweglichen Chassisteile (61) zwischen einer geschlossenen Konfiguration für den Aufbau und einer offenen Konfiguration für den Zugang zum Bewegungsdurchlaß (P) bewegbar sind.

3. Aufbauverfahren gemäß Anspruch 2, **dadurch gekennzeichnet, daß** die wenigstens zwei beweglichen Chassisteile (61) in geschlossener Konfiguration zwischen einem mechanisch verriegelten Zustand und einem entriegelten Zustand steuerbar sind.

4. Aulbauverfahren gemäß einem der Ansprüche 2 oder 3, **dadurch gekennzeichnet, daß** es
- einen Vorgang des Transportierens des länglichen Elements (E1) innerhalb des wenigstens einen ringförmigen Chassis (6) in offener Konfiguration, im Verlaufe dessen das längliche Element (E1) in horizontaler Translation verlagert wird, wobei einerseits seine Längsachse (E1') senkrecht oder wenigstens näherungsweise senkrecht ausgerichtet ist und andererseits sein unteres Ende (E13) auf einem Transportorgan (11) ruht,
- einen Vorgang des Steuerns des wenigstens einen ringförmigen Chassis (6) in geschlossener Konfiguration, damit das längliche Element (E1) durch die Bewegungsvorrichtung (5) festgeklemmt ist, und gegebenenfalls einen Vorgang des Steuerns der wenigstens zwei beweglichen Chassisteile (61) in verriegeltem Zustand,
- einen Vorgang des senkrechten Aufwärtsbewegens des länglichen Elements (E1) mittels der Bewegungsvorrichtung (5), um das längliche Element (E1) vom Transportorgan (11) zu trennen,
- einen Vorgang des Positionierens der Durchgangsachse (P') koaxial oder wenigstens näherungsweise koaxial zu einer durch ein Aufnahmeorgan (R) definierten Aufbauachse (R')
- einen Vorgang des senkrechten Abwärtsbewegens des länglichen Elements (E1) mittels der Bewegungsvorrichtung (5), um das untere Ende des länglichen Elements (E1) auf dem Aufnahmeorgan (R) abzusetzen,
- einen Vorgang des Befestigens des unteren Endes (E13) des länglichen Elements (E1) auf dem Aufnahmeorgan (R),
- gegebenenfalls einen Vorgang des Steuerns der wenigstens zwei bewegliche Chassisteile (61) im entriegelten Zustand und
- einen Vorgang des Steuerns des wenigstens einen ringförmigen Chassis (6) in offener Konfiguration, damit das längliche Element (E1) von der Bewegungsvorrichtung (5) befreit wird, aufweist.

5. Aufbauverfahren gemäß Anspruch 4, **dadurch gekennzeichnet, daß** die Bewegungsvorrichtung (5) im Verlauf des Vorgangs des senkrechten Abwärtsbewegens des länglichen Elements (E1) eine senkrechte Aufwärtsbewegung des länglichen Elements (E1) ermöglicht, und dies im Fall eines vom Aufnahmeorgan (R) auf das untere Ende (E13) des länglichen Elements (E1) ausgeübten Stoßes.

6. Aufbauverfahren gemäß einem der Ansprüche 1 bis 5, **dadurch gekennzeichnet, daß**
- das längliche Element (E1) aus einem Offshore-Windanlagenmast besteht,
- die Bewegungsvorrichtung (5) Ausrüstung eines schwimmenden Geräts ist und
- der Aufbau aus einem Aufbau des unteren Endes (E13) des länglichen Elements (E1) auf einem aus einem auf dem Meeresboden aufliegenden Fundament bestehenden Aufnahmeorgan (R) besteht.

7. Gerät für den Aufbau wenigstens eines länglichen Elements einer Windkraftanlage, insbesondere eines Masts der Windkraftanlage, das eine zylindrische Mantel fläche (E11) aufweist,
wobei das Gerät eine Vorrichtung (5) zum senkrechten Bewegen des länglichen Elements (E1) aufweist,
wobei die Vorrichtung (5) für das senkrechte Bewegen zum Festklemmen und zum kontrollierten Voranbringen des länglichen Elements (E1) wenigstens ein ringförmiges Chassis (6) aufweist, das einen Durchlaß (P) für die Bewegung des länglichen Elements (E1) entlang einer sich senkrecht oder wenigstens näherungsweise senkrecht erstreckenden Durchlaßachse (P') definiert,
**dadurch gekennzeichnet, daß** das wenigstens eine ringförmige Chassis (6) mehrere um die Durchlaßachse (P') herum angeordnete Führungskästen (7) trägt,
wobei die Führungskästen (7) jeweils einen länglichen Stützkörper (71) aufweisen, an dem eine Führungskette (72) translatorisch geführt wird, die von wenigstens einem motorisierten Rad (73) angetrieben wird,
wobei die sich in einer durch die Durchlaßachse (P') gehenden Ebene erstreckende Führungskette (72) ein vorderes Trum (721) aufweist, das sich senkrecht oder wenigstens näherungsweise senkrecht und gegenüber der Durchlaßachse (P') erstreckt, um sich auf der zylindrischen Mantelfläche (E11) des länglichen Elements (E1) abzustützen,
wobei die Bewegungsvorrichtung (5) Mittel zum Steuern einer synchronen und in derselben Richtung erfolgenden Wegführung der vorderen Trums (721) aufweist.

8. Gerät für den Aufbau gemäß Anspruch 7, **dadurch gekennzeichnet, daß** das wenigstens eine ringförmige Chassis (6) wenigstens zwei bewegliche Chassisteile (61) aufweist, die jeweils wenigstens einen der Führungskästen (7) aufweisen,
wobei die wenigstens zwei beweglichen Chassisteile (61) Mitteln (8) zum Bewegen zwischen einer geschlossenen Konfiguration für den Aufbau und einer offenen Konfiguration für den Zugang zum Bewegungsdurchlaß (P) zugeordnet sind.

9. Gerät für den Aufbau gemäß Anspruch 8, **dadurch gekennzeichnet, daß** die wenigstens zwei beweglichen Chassisteile (61) Mittel (9) zum mechanischen Verriegeln bei geschlossener Konfiguration für den Aufbau aufweisen, wobei die Verriegelungsmittel zwischen einem verriegelten Zustand und einem entriegelten Zustand steuerbar sind.

10. Gerät für den Aufbau gemäß einem der Ansprüche 7 bis 9, **dadurch gekennzeichnet, daß** die Führungskästen (7) mit dem wenigstens einen ringförmigen Chassis (6) über Mittel (10) fest verbunden sind, die eine winkelmäßige Änderung der Längsachse (721') des vorderen Trums (721) gegenüber der Durchlaßachse (P') ermöglichen.

11. Gerät für den Aufbau gemäß einem der Ansprüche 7 bis 10, **dadurch gekennzeichnet, daß** es wenigstens ein Transportorgan (11) aufweist, das dazu ausgelegt ist, das untere Ende (E13) eines länglichen Elements (E1) aufzunehmen, und das dazu ausgelegt ist, das längliche Element (E1) senkrecht oder wenigstens näherungsweise senkrecht zu tragen,
wobei das wenigstens eine Transportorgan (11) in verschiedene Positionen innerhalb des Geräts (1) bewegbar ist:
eine Lagerungsposition (A), die außerhalb der Bewegungsvorrichtung (5) gelegen ist und in der das Transportorgan (11) dazu bestimmt ist, ein längliches Element (E1) zu tragen,
- eine Bereithaltungsposition (B), in der das Transportorgan (11) dazu ausgelegt ist, das betreffende längliche Element (E1) an die Bewegungsvorrichtung (5) zu bringen, und
- eine Parkposition (C), in der das Transportorgan (11) dazu ausgelegt ist, das Bewegen eines anderen Transportorgans (11) bis zur Bewegungsvorrichtung (5) zu ermöglichen.

12. Gerät für den Aufbau gemäß einem der Ansprüche 7 bis 11, **dadurch gekennzeichnet, daß** die Bewegungsvorrichtung (5) wenigstens zwei ringförmige, übereinander angeordnete koaxiale Chassis (6) aufweist und daß jedes ringförmige Chassis (6) wenigstens vier Führungskästen (7) aufweist.

13. Gerät für den Aufbau gemäß einem der Ansprüche 7 bis 12, **dadurch gekennzeichnet, daß** das Gerät aus einem Schiff besteht, das
- Schwimmmittel (2) und
- eine mit der Bewegungsvorrichtung (5) ausgestattete Brücke (3) ausweist.

## Claims

1. A method of installation of at least one elongated element forming part of a wind turbine, in particular a wind turbine tower, having a cylindrical peripheral surface (E11),
said installation method comprises at least one operation of moving said at least one elongated element (E1) in vertical translation, that is performed by means of an operating device (5) for the controlled tightening and forward displacement of said elongated element (E1),
said operating device (5) comprises at least one annular frame (6) that defines a passage (P) for the circulation of said elongated element (E1), along a passage axis (P') extending vertically, or at least approximately vertically,
**characterized in that**
said at least one annular frame (6) carries several guiding cases (7) arranged about said passage axis (P'),
said guiding cases (7) each comprise an elongated support body (71) on which is guided in translation a guiding chain (72) that is driven by at least one motor-driven wheel (73),
said guiding chain (72), which extends in a plane passing through said passage axis (P'), includes a front strand (721) extending vertically, or at least approximately vertically, and opposite said passage axis (P'), to bear against said cylindrical peripheral surface (E11) of said elongated element (E1),
said at least one operation of moving in vertical translation is obtained by a synchronous displacement, and in a same direction, of said front strands (721).

2. The installation method according to claim 1, **characterized in that** said at least one annular frame (6) comprises at least two mobile frame portions (61) that each carry one at least of said guiding cases (7),
said at least two mobile frame portions (61) are movable between a closed configuration for installation and an open configuration for access to said circulation passage (P).

3. The installation method according to claim 2, **characterized in that**, in closed configuration, said at least two mobile frame portions (61) are controllable between a mechanically locked state and an unlocked state.

4. The installation method according to any one of claims 2 or 3, **characterized in that** it comprises:
- an operation of conveying said elongated element (E1) within said at least one annular frame (6) in open configuration, during which said elongated element (E1) is moved in horizontal translation, with, on the one hand, its longitudinal axis (E1') directed vertically, or at least approximately vertically, and, on the other hand, its lower end (E13) resting on a conveying member (11),
- an operation of controlling said at least one annular frame (6) to the closed configuration, so that said elongated element (E1) is enclosed by said operating device (5), and, as the case may be, an operation of controlling said at least two mobile frame portions (61) to the locked state,
- an operation of moving said elongated element (E1) vertically upward, by means of said operating device (5), so as to separate said elongated element (E1) from said conveying member (11),
- an operation of positioning the passage axis (P') coaxially, or at least approximately coaxially, to an installation axis (R') defined by a receiving member (R),
- an operation of moving said elongated element (E1) vertically downward, by means of said operating device (5), so as to place the lower end of said elongated element (E1) on said receiving member (R),
- an operation of fastening said lower end (E13) of said elongated element (E1) to said receiving member (R),
- as the case may be, an operation of controlling said at least two mobile frame portions (61) to the unlocked state, and
- an operation of controlling said at least one annular frame (6) to the open configuration, so that said elongated element (E1) is released with respect to said operating device (5).

5. The installation method according to claim 4, **characterized in that**, during the operation of moving said elongated element (E1) vertically downward, said operating device (5) allows an upward vertical moving of said elongated element (E1), in case of thrust exerted by said receiving member (R) on the lower end (E13) of said elongated element (E1).

6. The installation method according to any one of claims 1 to 5, **characterized in that**:
- the elongated element (E1) consists of an off-shore wind turbine tower,
- the operating device (5) is fitted on a floating craft, and
- the installation consists in installing the lower end (E13) of said elongated element (E1) on a receiving member (R) consisting of a foundation resting on the sea floor.

7. A craft for installing at least one elongated element (E1) forming part of a wind turbine, in particular a wind turbine tower, having a cylindrical peripheral surface (E11),
said craft including a device (5) for vertically moving said elongated element (E1),
said vertical operating device (5), for the controlled tightening and forward displacement of said elongated element (E1), comprising at least one annular frame (6) that defines a passage (P) for the circulation of said elongated element (E1), along a passage axis (P') extending vertically, or at least approximately vertically,
**characterized in that**
said at least one annular frame (6) carries several guiding cases (7) arranged about said passage axis (P'),
said guiding cases (7) each comprise an elongated support body (71) on which is guided in translation a guiding chain (72) that is driven by at least one motor-driven wheel (73),
said guiding peripheral chain (72), which extends in a plane passing through said passage axis (P'), includes a front strand (721) extending vertically, or at least approximately vertically, and opposite said passage axis (P'), to bear against said elongated element (E1),
said operating device (5) comprises means for controlling a synchronous displacement, and in a same direction, of said front strands (721).

8. The installation craft according to claim 7, **characterized in that** said at least one annular frame (6) comprises at least two mobile frame portions (61) that each comprise one at least of said guiding cases (7),
said at least two mobile frame portions (61) are associated with means (8) for moving them between a closed configuration for installation and an open configuration for access to said circulation passage.

9. The installation craft according to claim 8, **characterized in that** said at least two mobile frame portions (61) comprise means (9) for their mechanical locking in the closed configuration for installation, said locking means being controllable between a mechanically locked state and an unlocked state.

10. The installation craft according to any one of claims 7 to 9, **characterized in that** the guiding cases (7) are fastened with said at least one annular frame (6) through means (10) allowing an angular variation of the longitudinal axis (721') of the front stand (721) with respect to the passage axis (P').

11. The installation craft according to any one of claims 7 to 10, **characterized in that** it includes at least one conveying member (11) that is adapted to receive the lower end (E13) of an elongated element (E1) and that is adapted to carry said elongated element (E1) vertically, or at least approximately vertically,
said at least one conveying member (11) is mobile between different positions within said craft (1):
- a storage position (A), located out of said operating device (5) and in which said conveying member (11) is intended to carry an elongated element (E1),
- a presentation position (B), in which said conveying member (11) is arranged to present said associated elongated element (E1) within said operating device (5), and
- a parking position (C), in which said conveying member (11) is arranged to allow the circulation of another conveying member (11) up to the operating device (5).

12. The installation craft according to any one of claims 7 to 11, **characterized in that** the operating device (5) comprises at least two annular frames (6) superimposed and coaxial to each other,
and **in that** each annular frame (6) includes at least four guiding cases (7).

13. The installation craft according to any one of claims 7 to 12, **characterized in that** said craft (1) consists in a vessel including:
- flotation means (2), and
- a deck (3) fitted with said operating device (5).
